# EUROPÄISCHE PATENTSCHRIFT

(11) **EP 2 163 436 B1**
(45) Veröffentlichungstag und Bekanntmachung des Hinweises auf die Patenterteilung: **31.08.2011**
(21) Anmeldenummer: 09466018.0
(22) Anmeldetag: 08.09.2009
(51) Int. Cl.: B60R 21/06

(54) **Rückhaltesystem für ein Kraftfahrzeug**
Retention system for a motor vehicle
Système de retenue pour un véhicule automobile

(30) Priorität: 11.09.2008 CZ 20080558
(43) Veröffentlichungstag der Anmeldung: 17.03.2010
(73) Patentinhaber: Skoda Auto, 29360 Mladá Boleslav (CZ)
(72) Erfinder: Zetkovà, Dana, 51801 Dobruska (CZ); Novotny, Josef, 51681 Bystré (CZ); Svoboda, David, 50801 Horice (CZ)

(56) Entgegenhaltungen:
- EP-A- 0 914 989
- EP-A- 1 205 361
- DE-C1- 19 708 192
- US-A1- 2006 208 518

## Beschreibung

### Technisches Gebiet

Die Erfindung betrifft ein Rückhaltesystem für ein Kraftfahrzeug, vor allem ein Netzrollo zur Abtrennung eines Kofferraums vom Fahrgastraum.

### Bisheriger Stand der Technik

Gegenwärtig werden Personenkraftwagen mit einräumiger bzw. zweiräumiger Karosserie oft mit einer Sicherheitstrennwand ausgestattet, welche sich vertikal hinter den Fondsitzrücklehnen ausdehnt. Diese Trennwand verhindert Gegenständen, die sich im Kofferraum über der Oberkannte der Sitzrücklehnen befinden, dass diese im Fall eines Unfalls oder einer starken Bremsen in den Fahrgastraum eindringen können. Zur Sicherstellung der Fahrzeugvariabilität sind diese Trennwände am häufigsten in der Form eines selbstaufwindenden Rollos ausgeführt, damit eine gute Sicht nach hinten bei hoher Fahrzeugvariabilität gewährleistet wird. Die Kassette mit dem Rollo ist in der Regel an der hinteren Seite der Fondsitzrücklehnen befestigt, damit das Rollo zur Abtrennung des Fahrgastbereichs nicht nur in aufrechter Fondsitzlehnenposition für das Sitzen, sondern auch nach der Kofferraumerweiterung bei der Umlage der Fondsitzlehnenumlage in die waagerechte Position verwendet werden kann. In beiden Fällen zieht der Anwender die benötigte Rollolänge heraus und befestigt das Ende in die Verankerung im Fahrzeughimmel vertikal über der Rollokassette in der zugehörigen Position. Bei einer Verzögerung des Fahrzeugs haben die Gegenstände im Kofferraum die Tendenz sich nach vorn zur Trennwand zu bewegen, und damit das Rollo herauszuziehen. Damit es zu keiner Durchdringung dieser Gegenstände in den Fahrgastbereich kommt, muss diese weitere Abwicklung in beiden möglichen Positionen der Trennwand verhindert werden.

Die Verrastung in der Position der umgelegten Lehnen kann vorteilhafterweise durch die Wahl der abgewickelten Rollolänge erfolgen, die grundsätzlich genau so lang ist, wie die Entfernung der zugehörigen Verankerung im Fahrzeughimmel. In dieser Position ist dann keine weitere Verrastung gegen ein weiteres Abwickeln nötig. Für die Verrastung in aufrechter Sitzposition, also nach dem Abwickeln eines kürzeren Rolloumfangs, als der gesamten Rollolänge, werden gegenwärtig verschiedene Mechanismen verwendet, welche die Aufwickelwelle bei einer Überschreitung der Abwickelgeschwindigkeitsgrenzwert oder der Längsabbremsung des Fahrzeugs sichern. Diese Mechanismen arbeiten allgemein auf ähnlichen Prinzipien, wie die selbstaufwickelnden Sicherheitsgurte und sie verhindern kein langsames Herausziehen des Rollos. Bei wiederholtem Bremsen unter den Verzögerungsgrenzwert kann es so zu einer sukzessiven Verschiebung des Gepäcks bis in den Fahrgastbereich kommen. Deshalb werden zusätzliche Mechanismen verwendet, welche die Wickelwelle gegen die Drehung im Sinn der Abwicklung nach der Abwicklung einer bestimmten Rolllänge blockieren, die der Entfernung von der Kassette zur zugehörigen Verankerung im Dachhimmel in aufrechter Position entspricht.

Eines dieser Mechanismen ist im Dokument DE 102 07 575 A1 beschrieben: An der Wickelwelle ist eine Rastscheibe mit vielen Aussparungen angebracht, in die eine Sperrklinke eingreift, die die Welle gegen ein Drehen in Abwickelrichtung des Rollos sichert. Der Mechanismus ist mit einem Zählmechanismus ausgestattet, welcher sich aus einem auf der Wickelwelle angebrachten Antriebsrad mit einem Hebedaumen und einem Abtriebsrad zusammensetzt, welches mit einer Steuernockenwelle mit einer Aussparung ausgestattet ist. Die Sperrklinke befindet sich an einem Schwenkhebel, welcher ein Stößel trägt, welcher an der Nockenwelle anliegt. Die Steuerungsnockenwelle ermöglicht eine Verschiebung der Sperrklinke in die verrastete Position nur nach dem Einrasten des Stößels in die Aussparung. Die Bewegung des Schwenkhebels wird durch eine Viskobremse gebremst. In der aufgewickelten Position des Rollos sitzt der Stößel auf der Nockenwelle auf und die Sperrklinke sichert die Welle gegen die Drehung nicht. Bei dem Abwickeln des Rollos verdreht der Hebedaumen bei jeder Umdrehung die Steuerungsnockenwelle. Nach der Umdrehungsanzahl, die der geforderten Länge der Rolloabwicklung entspricht, befindet sich der Stößel im Bereich der Aussparung der Steuerungsnockenwelle. Durch den Einfluss der Bremse verschiebt sich die Sperrklinke erst mit einer gewissen Verspätung in die verrastete Position. Wenn die Drehung der Welle andauert, verfehlt die Aussparung den Stößel und dieser legt sich wiederum an die Nockenwelle an. Die Drehung der Welle wird dadurch nicht sofort nach dem Erreichen der Rolllänge blockiert, die der Entfernung zwischen der Kassette und den zugehörigen Verankerungen im Dachhimmel in der aufrechten Sitzposition entspricht, sondern das weitere Abwickeln wird dadurch ermöglicht. Zur Sicherung kommt es mit einer gewissen Verspätung nach der Unterbrechung der Rolloabwicklung, welche durch die Befestigung des Rollos in der Arbeitsposition signalisiert wird. Die Drehung in der Richtung des Aufwickelns wird nicht blockiert, nach dem Ausklinken aus den Verankerungen kann deshalb das Rollo wieder eigenständig in die Kassette aufgewickelt werden.

Dieser Mechanismus beinhaltet viele Bestandteile und deshalb ist dieser nicht nur teuer, sondern auch anfällig für Störungen.

Ein Rückhaltesystem nach dem Oberbegriff von Anspruch 1 ist in dem Dokument EP 914 989 A offenbart.

### Darstellung der Erfindung

Die aufgeführten Nachteile werden durch das Rückhaltesystems für das Kraftfahrzeug nach der Erfindung, insbesondere das selbsttätig aufrollende Netzrollo zur Abtrennung des Fahrgastraums vom Kofferraum, beseitigt. Das Rollo verfügt über eine Wickelwelle, die eine abwickelbare Bahn eines ausreichend festen und dabei durchsichtigen Werkstoffs trägt, z.B. Festigkeitsnetz u.Ä. Mit dieser Welle ist eine Sperrscheibe undrehbar verbunden, die mit einer Sperrklinke zusammenarbeitet.

Die Sperrklinke ist zwischen der freilaufenden Position und der verrasteten Position verstellbar, in der diese die Sperrscheibe und damit auch die Wickelwelle gegen die Drehung in Richtung der Werkstoffbahnabwicklung verrastet. Die Drehung in Richtung des Aufwickelns ist auch in der verrasteten Position möglich. Die Sperrscheibe weist eine Steuerkurve auf, die in der Abhängigkeit zur Winkeldrehung der Sperrscheibe die Sperrklinke in freilaufender Position hält oder deren Verschiebung in die verrastete Position ermöglicht und die Blockierung eines weiteren Rolloabwickelns verursacht.

Die Bewegung der Sperrklinke wird durch eine Bremse verlangsamt, wobei deren Bewegung wenigstens aus der freilaufenden in die verrastete Position gebremst wird. Die Verlangsamung der Bewegung in umgekehrter Richtung ist für die korrekte Mechanismusfunktion nicht notwendig, aber es bringt Vorteile bezüglich einer einfacheren Konstruktion und des geräuschlosen Laufs bei Aufwickeln, denn die Sperrklinke kopiert nicht fortlaufend die Oberfläche der Steuerkurve einschließlich der Aussparungen.

Die Steuerkurve ist so eingeordnet, dass die Sperrklinke in freilaufender Position wenigstens bei ganz aufgewickelter Werkstoffbahn gehalten ist und deren Verlagerung in die verrastete Position nach einer solchen Drehung der Wickelwelle ermöglicht ist, welche der Abwicklung der festgelegten Länge der Werkstoffbahn entspricht, kleiner als die Gesamtlänge der Werkstoffbahn. Die festgelegte Länge stimmt vorteilhafterweise mit der Entfernung der Rollokassette zu den Verankerungen im Dachhimmel bei senkrechter Lehnenposition überein. Bei der Abwicklung des Rollos dreht sich die Wickelwelle mehrere Male, bevor die festgelegte Länge erreicht wird. Der Durchmesser der Wickelwelle muss hinsichtlich der Dicke der Werkstoffbahn so gewählt werden, dass nach der Abwicklung der festgelegten Länge die Steuernockenwelle anders winkelig gegenüber der Sperrklinke bzw. der Rollokassette , als bei komplett aufgewickeltem Werkstoffbahn steht. Unter der Berücksichtigung unter Betriebsverhältnissen unterschiedlicher "Aufwickeldichten" der Werkstoffbahnaufwicklung bei verschiedenen Aufwickelgeschwindigkeiten muss die Ruhestellung so gewählt werden, dass die entsicherte Position der Sperrklinke bei vollständig aufgewickeltem Werkstoffbahn immer gewährleistet ist.

Die Sperrklinke weist mindestens einen Sperrzahn und die Steuerkurve wenigstens eine Aussparung auf, die mit diesem Sperrzahn korrespondiert. Bei der Anforderung hinsichtlich eines höheren Blockierungsmoments oder bei eingeschränkten, räumlichen Möglichkeiten können mehrere kleinere Zähne und ihnen entsprechende Aussparungen verwendet werden. Vorteilhafterweise ist in der Steuerkurve lediglich eine Aussparung eingearbeitet, wodurch ein großer Umfang der Wellenwinkeldrehung erreicht wird, bei dem die Sperrklinke entsichert ist. Dieses ist für die Garantie der entsicherten Position der Sperrklinke bei vollständig aufgewickeltem Werkstoffbahn und auch bei verschieden engen Wickelzuständen vorteilhaft. Es ist auch möglich mehrere solcher Aussparungen in der Steuerkurve auszubilden, die gleichmäßig bzw. ungleichmäßig winkelig verteilt sind.

Auf die Sperrklinke wirkt ein Federelement, das den Zahn auf die Oberfläche der Steuerkurve andrückt und die selbsttätige Sicherung sicherstellt. Vorteilhafterweise können eigenständige Torsionsfedern bzw. Zugfedern, bzw. Kunststoffblattfedern verwendet werden, welche direkt als Bestandteil der Sperrklinke ausgefertigt sind.

Der Sperrzahn weist eine Blockierfläche zur Scheibensicherung gegen ein Verdrehen in Abwickelrichtung der Werkstoffbahn und eine Steuerfläche für den Kontakt mit der Steuerkurve auf. Bei der Drehung liegt der Sperrzahn mit der Steuerfläche an die Steuerkurve an den Stellen an, wo sich sein Profil allmählich ändert. Bei deren abrupten Änderung in Wirkungsrichtung des Federelements wird die Bewegungsgeschwindigkeit der Sperrklinke durch die Bremse so begrenzt, dass sich die Sperrklinke von der Fläche der Steuerkurve entfernt und erst mit einer Verzögerung und einer Winkelverschiebung auf dieser aufliegt.

Die Steuerkurve wird vorteilhafterweise durch eine radiale Nockenwelle gebildet, wobei die Aussparung für den Sperrzahn näher an der Drehachse der Sperrscheibe als der restliche Teil der Steuerkurve ist. Die radiale Nockenwelle kann im wesentlichen eine Rundform, versetzte hinsichtlich der Drehachse der Sperrscheibe, aufweisen. Vorteilhafterweise ist dieses so versetzt, dass der Punkt der Steuerkurve, welcher am weitesten von der Scheibendrehachse ist, im wesentlichen gegenüber der Aussparung oder zwischen dieser Stelle und der Aussparung in Drehrichtung beim Abwickeln liegt. Bei der Wellendrehung beim Abwickeln ist der Sperrzahn somit am weitesten vom Drehmittelpunkt kurz davor entfern, bevor die Steuerkurve allmählich zur Aussparung überzugehen beginnt. Der Radius der Steuerkurve ist an dieser Stelle größer als hinter der Aussparung. Die Differenz der Radien muss vorteilhafterweise so gewählt werden, dass bei gängiger Wellendrehgeschwindigkeit diese größer ist, als der Weg, welchen die Sperrklinke, die durch die Bremse gebremst in der Zeit, die zur Drehung der Sperrscheibe zwischen diesen beiden Stellen benötigt wird, zurücklegt.

Die Sperrklinke wird vorteilhafterweise schwenkbar gelagert, jedoch kann auch eine Sperrklinke z.B. verschiebbar verwendet werden, was jedoch hinsichtlich des Einbauraums aufwändiger wäre. Die räumlich sparsamste Lösung kann mit einer Sperrklinke in der U-Form erzielt werden, welche die Sperrscheibe umspannt. An einem Ende ist diese drehbar oder schwenkbar gelagert, an der gegenüberliegenden Seite ist diese mit einer Verzahnung für die Rotationsbremse ausgestattet, und an der Innenseite befindet sich ein Sperrzahn.

In der vollständig aufgewickelten Position der Werkstoffbahn lehnt der Sperrzahn an die Steuerkurve außerhalb der Aussparung an und verhindert so nicht die Wellendrehung. Bei der Abwicklung der Werkstoffbahn dreht sich die Wickelwelle und mit dieser die Sperrscheibe in Richtung der Abwicklung und der Sperrzahn kopiert die Oberfläche der Steuerkurve. Bei gängiger Drehgeschwindigkeit fasst der Sperrzahn nicht bei jeder Umdrehung in die Aussparung, denn dessen Bewegung wird durch die Bremse verlangsamt. Dessen Eingriff in die Aussparung ist erst mit einer bestimmten Verzögerung möglich, diese Zeitverzögerung ermöglicht dem Anwender eine beliebige Länge der Werkstoffbahn abzuwickeln. Nach der Abwicklung der Länge, welche der Entfernung von der Kassette zu den zugehörigen Verankerungen im Dachhimmel in senkrechter Sitzlehnenposition entspricht, dreht sich die Sperrscheibe mit der Aussparung zu dem Sperrzahn, welcher sich jedoch noch von der Aussparung entfernt befindet und sich langsam zu dieser bewegt. Zum Einrasten des Sperrzahns in die Aussparung und damit zur Blockierung der Wickelwelle gegen eine weitere Abwicklung der Werkstoffbahn kommt es erst nach einer Verzögerung nach dem Anhalten der Drehung, was die problemlose Rollobefestigung ermöglicht. Beim Aufwickeln klingt der Anwender das Rollo aus der Verankerung aus, die Welle beginnt sich durch die Einwirkung des Wickelmechanismus in die Drehrichtung zu drehen, der Sperrzahn verlässt die Aussparung und die Welle dreht sich frei bis zur vollständigen Aufwicklung der Werkstoffbahn.

Ein großer Vorteil des Rückhaltesystems laut der Erfindung ist die Einfachheit, denn der Sperrzahn der Sperrklinke erfüllt parallel die Funktion des Steuerungsstößels und des Sicherungselements. Das Rückhaltesystem laut der Erfindung kann selbstständig oder in der Kombination mit gängig verwendeten Mechanismen funktionieren, welche die Wickelwelle gegen ein Drehen bei der Überschreitung der Grenzgeschwindigkeit oder der grenzwertigen Längsverzögerung des Fahrzeugs sichern. Diese können vorteilhafterweise am gegenüberliegenden Wickelwellenende platziert sein.

### Übersicht der Figuren den Zeichnungen

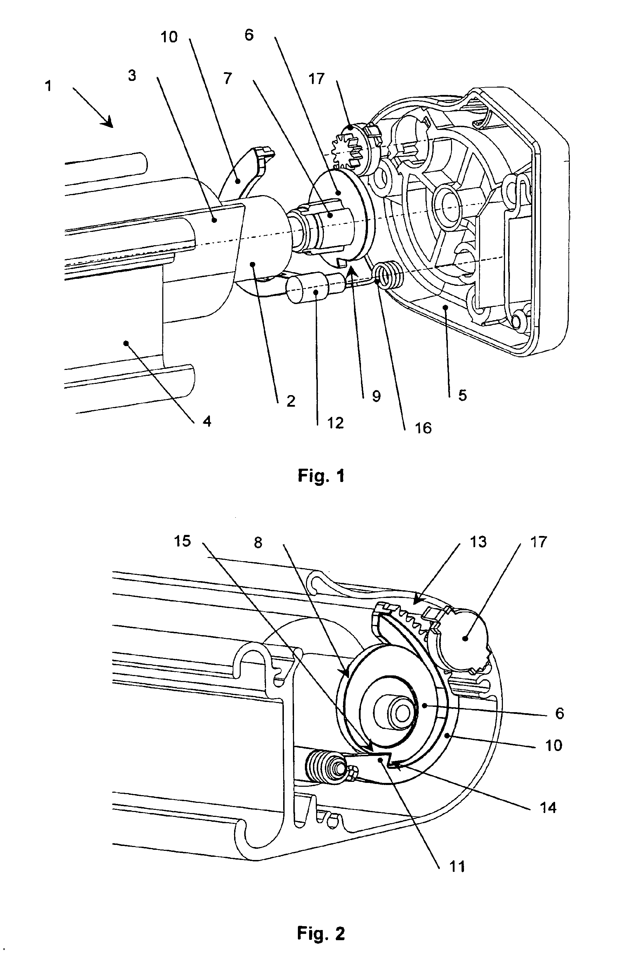

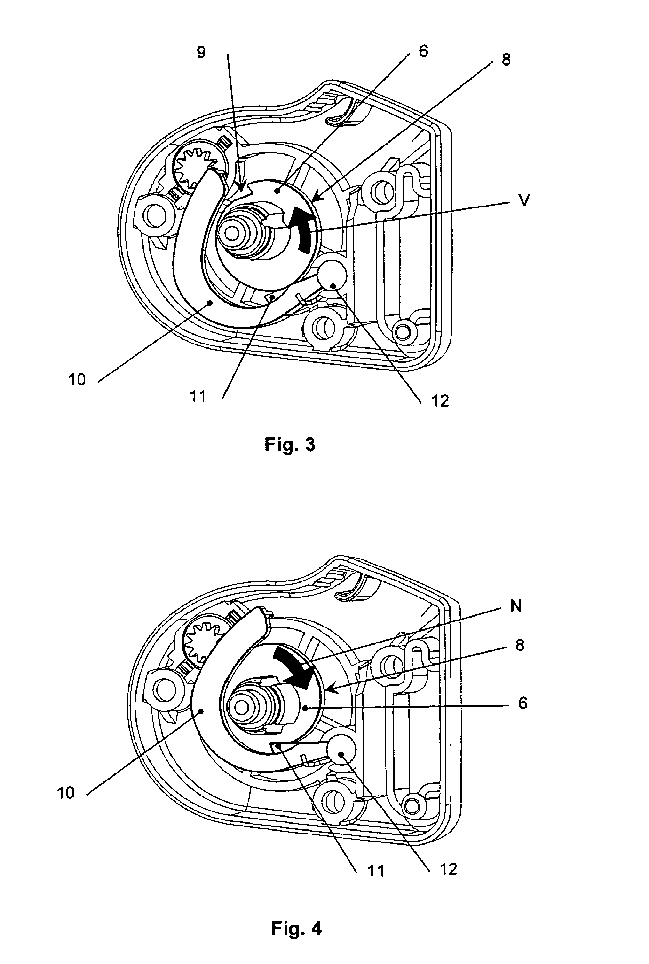

In der Fig. 1 ist ein Detail des Rückhaltesystems laut der Erfindung in Teilezerlegung aus der Ansicht schräg von innen dargestellt. In der Fig. 2 befindet sich das Detail des zusammengesetzten Rückhaltesystems aus der Außenansicht, bei verrasteter Position der Sperrklinke. In der Fig. 3 und 4 befindet sich der Gehäusedeckel mit montierter Sperrscheibe, Sperrklinke und Bremse aus der Ansicht von innen, wobei in der Fig. 3 die Sperrklinke in freilaufender und in der Fig. 4 in verrasteter Position dargestellt ist.

### Ausführungsbeispiel der Erfindung

Auf den beigelegten Figuren befindet sich die Darstellung des Beispiels einer der möglichen Ausführungen der Erfindung. Das Rollo 1 umfasst die Kassette 4, an deren Enden die Abdeckungen 5 aufgesetzt sind. Auf der Wickelwelle 2 ist der Werkstoffbahn 3 aufgewickelt, welcher mit einem Ende an dieser befestigt ist und am anderen Ende mit einem nicht dargestellten Endstange versehen ist, die zur Befestigung zu den näher nicht spezifizierten Verankerungen des Fahrzeughimmels dient. Die Wickelwelle ist drehbar in den Abdeckungen 5 gelagert, und mit einer näher nicht dargestellten Wickelvorrichtung, z.B. einer Torsionsfeder versehen.

Am dargestellten Ende ist in der Wickelwelle 2 mit einem Flansch 7 die Sperrscheibe 6 aufgesteckt. Der Flansch 7 ist mit Rillen für die undrehbare Verbindung mit der Wickelwelle 2 versehen. Auf der gegenüberliegende Seite zu dem Flansch ist die Sperrscheibe 6 mit einem Bolzen versehen, mittels dessen diese drehbar im Lager der Abdeckung 5 gelagert ist. Die Sperrscheibe 6 wird durch eine radiale Nockenwelle gebildet, deren Oberfläche eine Steuerkurve 8 bildet und welche mit einer Aussparung 9 versehen ist. Die Nockenwelle ist kreisförmig, exzentrisch gegenüber der Wickelwelle bzw. der Sperrscheibe platziert. Die Aussparung 9 unterbricht die Steuerkurve 8 an den Stellen, an denen diese dieser Achse am nächsten kommt.

Die Sperrklinke 10 weist im wesentlichen eine U-Form auf und umfasst die Sperrscheibe 6. Mit einem Ende ist diese schwenkbar in der Abdeckung 5 mittels eines Bolzens 12 gelagert und am gegenüber liegenden Ende auf der Außenseite mit einer Verzahnung 13 für die Bremse 17 versehen. Die Bremse 17 ist eine Rotationsbremse, die eine hochviskose Flüssigkeit verwendet, es können jedoch auch Reibungsbremsen oder andere Bremsen verwendet werden. An der Innenseite, zugekehrt zur Sperrscheibe 6, ist die Sperrklinke 10 mit einem Sperrzahn 11 versehen. Der Sperrzahn 11 weist eine Steuerfläche 15 auf, die im wesentlichen die Tangente zur Steuerkurvenoberfläche 8 darstellt und mit dieser sich im Kontakt befindet, und eine Blockierfläche 14, die zur Steuerkurvenoberfläche 8 im wesentlichen senkrecht steht und die Sperrscheibe 6 gegen ein Drehen in Richtung der Werkstoffbahnabwicklung blockiert.

In der Fig. 3 ist die Sperrklinke in freilaufender Position, z.B. bei vollständig aufgewickeltem Werkstoffbahn 3 dargestellt. Die Steuerfläche 15 des Sperrzahns 11 liegt an die Steuerkurve 8 außerhalb der Aussparung 9 an und die Drehung des Sicherungsrings 6 ist in beiden Richtungen möglich. Bei der Abwicklung dreht sich die Sperrscheibe 6 in Richtung V und die Steuerfläche 15 rutscht auf der Steuerkurve 8. Die Bremse 17 verlangsamt die Bewegung der Sperrklinke 10 so, dass bei gängiger Geschwindigkeit der Abwicklung der Werkstoffbahn 3 und also auch bei der Drehung des Sicherungsrings 6, der Radius der Steuerkurve 8 sich schneller verkleinert als bei die Bewegung der Sperrklinke 10 aufgrund der Einwirkung der Feder 16. Die Steuerfläche 15 entfernt sich so von der Steuerkurve 8 und bevor diese wieder auf diese aufsetzt, überwindet diese die Aussparung 9 und setzt so wiederholt auf den glatten Teil auf. Dieses wiederholt sich bei jeder Drehung der Wickelwelle 2. Bei dem Herausziehen der Werkstoffbahn 3 um die festgelegte Länge, bei der es zu einer Verrastung gegen ein Drehen kommen soll, dreht sich die Sperrscheibe mit den Aussparungen 9 in den Bereich des Sperrzahns 11. Die festgelegte Länge entspricht der Entfernung von der Kassette zu den zugehörigen Verankerungen im Dachhimmel bei der aufrechten Sitzlehnenposition. Es ist die Befestigung der Rolloendstange an die Verankerungen im Dachhimmel in dieser Position oder die weitere Abwicklung bis zur Erreichung der maximalen Werkstoffbahnlänge 3 möglich. Bei der Befestigung am Dachhimmel kommt es durch den Einfluss des selbstaufwindenden Mechanismus zur Drehung in Richtung des Aufwickelns N bis zur Spannung der Werkstoffbahn 3, und zum Einrasten des Sperrzahns 11 in die Aussparung 9, was die Fig. 4 darstellt. Dadurch wird die Drehung der Sperrscheibe 6 gegen die Drehung in Richtung der Abwicklung V blockiert. Der Werkstoffbahn 3 kann sich nicht weiter Abwickeln und eventuell sich verschiebende Gegenstände können bei einer Verzögerung nicht aus dem Kofferraum in die Fahrgastraum eindringen. Der Sperrzahn 11 kann auch mittels seiner Steuerfläche 15 noch auf die Steuerkurve 8 aufsetzen, mit einem bestimmten, geringen Vorlaufwinkel vor der Aussparung 9, jedoch immer auf den Kurvenbereich mit sich verkleinerndem Radius. So kann ein bestimmtes Spiel des Weiterdrehens der Wickelwelle vor der vollständigen Sicherung ausgebildet werden. Dieses kann während des Betriebs mit sich unterscheidenden Dichten der Werkstoffbahnaufwicklung 3 auf die Wickelwelle vorteilhaft sein, denn die genaue Winkeleindrehung aus der Position bei vollständig aufgewickelter Werkstoffbahn zur Abwicklung der festgelegten Länge kann in einer gewissen Toleranz unterschiedlich sein. Danach kann die Blockierfläche 14 und der diesem entsprechenden Bereich der Aussparung mit Neigung gegen die Abwicklungsrichtung gebildet werden, wodurch ein sicherer Kontakt zwischen dem Sperrzahn 11 und der Aussparung 9 zustande kommt. Es ist notwendig, dass der Sperrzahn 11 auf die Steuerkurve 8 immer noch vor der Aussparung 9 oder direkt in diese, nicht jedoch hinter diese, aufsitzt. Dieses hätte keine Sicherung der Wickelwelle 2 gegen die Drehung und die freie Abwicklung der Werkstoffbahn 3 zur Folge.

Nach der Freigabe der Endstange aus den Verankerungen kann sich die Wickelwelle 2 durch die Wirkung des selbstaufwindenden Mechanismus bis zum vollständigen Aufwickeln frei drehen. Nach der Freigabe aus den Verankerungen bleibt es in der Regel notwendig eine geringe Verschiebung der Endstange in Richtung weg von der Rollokassette 4 vorzunehmen. Dieses wird entweder Dank des oben beschriebenen Winkelspiels zwischen dem Sperrzahn 11 und der Aussparung 9 bis zur vollständigen Verrastung oder bei Anforderung hinsichtlich eines minimalen Spiels, durch die elastische Deformation der Werkstoffbahn 3 im Zug sicher gestellt.

### Gewerbliche Anwendbarkeit

Das Rückhaltesystem für das Kraftfahrzeug laut der Erfindung kann bei allen Kraftfahrzeugen bei der Notwendigkeit einer Trennung des Fahrgastraums vom Kofferraum, bzw. der Trennung des Kofferraums verwendet werden.

## Patentansprüche

1. Rückhaltesystem für ein Kraftfahrzeug, insbesondere ein selbstaufwickelndes Netzrollo zur Abtrennung eines Kofferraums vom Fahrgastraum, das eine eine abwickelbare Werkstoffbahn (3) tragende Wickelwelle (2) aufweist, wobei mit der Welle (2) undrehbar eine Sperrscheibe (6) verbunden ist, die mit einer Sperrklinke (10) kooperiert, welche zwischen der freilaufenden und verrasteten Position verlagerbar ist, in der diese die Sperrscheibe (6) gegen die Drehung in Richtung der Abwicklung der Werkstoffbahn (3) blockiert, **dadurch gekennzeichnet, dass** die Sperrscheibe (6) eine Steuerkurve (8) aufweist, die in der Abhängigkeit zu deren Verdrehung die Sperrklinke (10) in freilaufender Position hält oder deren Verschiebung in die verrastete Position ermöglicht, und , das die Bewegung der Sperrklinke (10), wenigstens aus der freilaufenden in die verrastete Position, durch eine Rotationsbremse (17) verzögert wird.

2. Rückhaltesystem für ein Kraftfahrzeug nach Anspruch 1, **dadurch gekennzeichnet, dass** die Steuerkurve (8) die Sperrklinke (10) in freilaufender Position wenigstens bei vollständig aufgewickelter Werkstoffbahn (3) hält, und deren Verschiebung in die verrastete Position nach einer solchen Verdrehung der Welle (2) ermöglicht, die der festgelegten Länge der Abwicklung der Materialbahn (3) entspricht, die kürzer als deren Gesamtlänge ist.

3. Rückhaltesystem für ein Kraftfahrzeug nach einem der vorangegangenen Ansprüche, **dadurch gekennzeichnet, dass** die Sperrklinke (10) mindestens einen Sperrzahn (11) aufweist und die Steuerkurve (8) mindestens eine Aussparung (9) aufweist, die mit diesem Sperrzahn (11) korrespondiert..

4. Rückhaltesystem für ein Kraftfahrzeug nach Anspruch 3, **dadurch gekennzeichnet, dass** auf die Sperrklinke (10) ein Federelement (16) wirkt, welches den Sperrzahn (11) in Richtung zu der Steuerkurvenoberfläche (8) drückt.

5. Rückhaltesystem für ein Kraftfahrzeug nach Anspruch 4, **dadurch gekennzeichnet, dass** der Sperrzahn (11) eine Blockierfläche (14) zur Verrastung der Sperrscheibe (6) gegen die Drehung in Richtung der Abwicklung der Werkstoffbahn (3), und eine Steuerfläche (15) für den Kontakt mit der Steuerkurve aufweist.

6. Rückhaltesystem für ein Kraftfahrzeug nach einem der Ansprüche 3 bis 5, **dadurch gekennzeichnet, dass** die Steuerkurve (8) durch eine radiale Nockenwelle gebildet ist, und die Aussparung (9) näher an der Drehachse der Sperrscheibe (6), als der restliche Bereich der Steuerkurve (8) ist.

7. Rückhaltesystem für ein Kraftfahrzeug nach Anspruch 6, **dadurch gekennzeichnet, dass** die radiale Nockenwelle im wesentlichen kreisförmig, exzentrisch hinsichtlich der Drehachse der Sperrscheibe (6), ist.

8. Rückhaltesystem für ein Kraftfahrzeug nach einem der vorangegangenen Ansprüche, **dadurch gekennzeichnet, dass** die Sperrklinke (10) schwenkbar gelagert ist.

9. Rückhaltesystem für ein Kraftfahrzeug nach Anspruch 8, **dadurch gekennzeichnet, dass** die Sperrklinke (10) eine im wesentlichen U-Form aufweist, welche die Sperrscheibe (6) umspannt, und mit einem Ende schwenkbar gelagert ist und am gegenüber liegenden Ende mit einer Verzahnung (13) für die Rotationsbremse (17) versehen ist.

## Claims

1. Retention system for a motor vehicle, in particular a self-coiling net roller blind for separating off a luggage compartment from the passenger compartment, the net roller blind having a winding shaft (2) bearing a material web (3) which can be uncoiled, wherein a locking disc (6) is connected nonrotatably to the shaft (2) and cooperates with a locking catch (10) which can be displaced between the freewheeling and latched position, in which said locking catch blocks the locking disc (6) against rotating in the direction of uncoiling the material web (3), **characterized in that** the locking disc (6) has a radial cam (8) which, depending on the rotation thereof, keeps the locking catch (10) in a freewheeling position or permits the displacement thereof into the latched position, and **in that** the movement of the locking catch (10), at least from the freewheeling position into the latched position, is decelerated by a rotation brake (17).

2. Retention system for a motor vehicle according to Claim 1, **characterized in that** the radial cam (8) keeps the locking catch (10) in a freewheeling position at least when the material web (3) is fully coiled, and permits displacement of said locking catch into the latched position after the shaft (2) is rotated to an extent corresponding to the fixed length of the uncoiling of the material web (3), which length is shorter than the overall length of said material web.

3. Retention system for a motor vehicle according to one of the preceding claims, **characterized in that** the locking catch (10) has at least one locking tooth (11), and the radial cam (8) has at least one cutout (9) which corresponds to said locking tooth (11).

4. Retention system for a motor vehicle according to Claim 3, **characterized in that** a spring element (16) acts on the locking catch (10) and presses the locking tooth (11) in the direction of the radial cam surface (8).

5. Retention system for a motor vehicle according to Claim 4, **characterized in that** the locking tooth (11) has a blocking surface (14) for latching the locking disc (6) against rotation in the direction of uncoiling of the material web (3), and a control surface (15) for contact with the radial cam.

6. Retention system for a motor vehicle according to one of Claims 3 to 5, **characterized in that** the radial cam (8) is formed by a radial camshaft, and the cutout (9) is closer to the axis of rotation of the locking disc (6) than the remaining region of the radial cam (8).

7. Retention system for a motor vehicle according to Claim 6, **characterized in that** the radial camshaft is substantially circular eccentrically with respect to the axis of rotation of the locking disc (6).

8. Retention system for a motor vehicle according to one of the preceding claims, **characterized in that** the locking catch (10) is mounted pivotably.

9. Retention system for a motor vehicle according to Claim 8, **characterized in that** the locking catch (10) has a substantially U shape which clasps the locking disc (6) and is mounted pivotably at one end and is provided at the opposite end with a toothing (13) for the rotation brake (17).

## Revendications

1. Système de retenue pour un véhicule automobile, notamment store en filet autoenroulant permettant de séparer un coffre de l'habitacle et comportant un arbre d'enroulement (2) supportant un lé de tissu (3) pouvant être déroulé, un disque d'arrêt (6) étant relié à l'arbre (2) de façon à ne pas pouvoir tourner et coopérant avec un cliquet d'arrêt (10) pouvant être déplacé entre la position en roue libre et la position encliquetée dans laquelle le cliquet bloque le disque d'arrêt (6) contre toute rotation en direction du déroulement du lé de tissu (3), **caractérisé en ce que** le disque d'arrêt (6) comporte une came de commande (8) maintenant le cliquet d'arrêt (10) dans la position en roue libre ou permettant son déplacement dans la position encliquetée en fonction de son degré de rotation et **en ce que** le disque d'arrêt ralentit le mouvement du cliquet d'arrêt (10), au moins de la position en roue libre vers la position encliquetée grâce à un frein à rotation (17).

2. Système de retenue pour un véhicule automobile selon la revendication 1, **caractérisé en ce que** la came de commande (8) retient le cliquet d'arrêt (10) dans la position en roue libre au moins lorsque le lé de tissu (3) est entièrement enroulé et permet son déplacement dans la position encliquetée après une rotation de l'arbre (2) correspondant à une certaine longueur déterminée du déroulement du lé de tissu (3) inférieure à sa longueur totale.

3. Système de retenue pour un véhicule automobile selon l'une quelconque des revendications précédentes, **caractérisé en ce que** le cliquet d'arrêt (10) présente au moins une dent d'arrêt (11) et que la came de commande (8) présente au moins un évidement (9) correspondant à cette dent d'arrêt (11).

4. Système de retenue pour un véhicule automobile selon la revendication 3, **caractérisé en ce qu'**un élément de ressort (16) comprimant la dent d'arrêt (11) en direction de la surface de la came de commande (8) agit sur le cliquet d'arrêt (10).

5. Système de retenue pour un véhicule automobile selon la revendication 4, **caractérisé en ce que** la dent d'arrêt (11) présente une surface de blocage (14) permettant d'encliqueter le disque d'arrêt (6) de façon à l'empêcher de tourner en direction du déroulement du lé de tissu (3) ainsi qu'une surface de commande (15) permettant d'établir le contact avec la came de commande.

6. Système de retenue pour un véhicule automobile selon l'une quelconque des revendications 3 à 5, **caractérisé en ce que** la came de commande (8) est formée par un arbre à cames radial et que l'évidement (9) se place plus près de l'axe de rotation du disque d'arrêt (6) que le reste de la came de commande (8).

7. Système de retenue pour un véhicule automobile selon la revendication 6, **caractérisé en ce que** l'arbre à cames radial prend pour l'essentiel une forme de cercle excentré par rapport à l'axe de rotation du disque d'arrêt (6).

8. Système de retenue pour un véhicule automobile selon l'une quelconque des revendications précédentes, **caractérisé en ce que** le cliquet d'arrêt (10) est disposé de façon à pouvoir pivoter.

9. Système de retenue pour un véhicule automobile selon la revendication 8, **caractérisé en ce que** le cliquet d'arrêt (10) prend pour l'essentiel une forme en U qui enserre le disque d'arrêt (6), est disposé de façon à pouvoir pivoter avec une extrémité et est pourvu, au niveau de son extrémité opposée, d'un endentement (13) pour le frein à rotation (17).
